(19) Europäisches Patentamt / European Patent Office / Office européen des brevets

(11) **EP 2 705 442 B1**

(12) **EUROPEAN PATENT SPECIFICATION**

(45) Date of publication and mention
of the grant of the patent:
**25.12.2019 Bulletin 2019/52**

(21) Application number: **12721633.1**

(22) Date of filing: **25.04.2012**

(51) Int Cl.:
***G06F 17/27*** (2006.01)

(86) International application number:
**PCT/US2012/034871**

(87) International publication number:
**WO 2012/148950 (01.11.2012 Gazette 2012/44)**

(54) **REPRESENTING INFORMATION FROM DOCUMENTS**

DARSTELLUNG VON INFORMATIONEN AUS DOKUMENTEN

REPRÉSENTATION D'INFORMATIONS PROVENANT DE DOCUMENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.04.2011 US 201113097619**

(43) Date of publication of application:
**12.03.2014 Bulletin 2014/11**

(73) Proprietor: **Financial & Risk Organisation Limited
London, E14 5AQ (GB)**

(72) Inventors:
• **MALIK, Hassan, H.
Monmouth Junction
NJ 08852 (US)**
• **BHARDWAJ, Vikas, S.
Jersey City
NJ 07310 (US)**
• **FIORLETTA, Huascar
New York
NY 10027 (US)**
• **RAFAT, Armughan
Franklin Park
NJ 08823 (US)**

(74) Representative: **IPrime Rentsch Kaelin AG
Hirschengraben 1
8001 Zürich (CH)**

(56) References cited:
**US-A1- 2004 024 769    US-A1- 2011 066 585**

• **JACOBS P S ET AL: "A friendly merger of conceptual expectations and linguistic analysis in a text processing system", PROCEEDINGS OF THE CONFERENCE ON ARTIFICIAL INTELLIGENCE APPLICATIONS. SAN DIEGO, MAR. 16 - 18, 1988; [PROCEEDINGS OF THE CONFERENCE ON ARTIFICIAL INTELLIGENCE APPLICATIONS], WASHINGTON, IEEE COMP. SOC. PRESS, US, vol. CONF. 4, 14 March 1988 (1988-03-14), pages 351-356, XP010011917, DOI: 10.1109/CAIA.1988.196130 ISBN: 978-0-8186-0837-7**
• **PEGGY M. ANDERSEN ET AL: "Automatic Extraction of Facts from Press Releases to Generate News Stories", ANLC '92 PROCEEDINGS OF THE THIRD CONFERENCE ON APPLIED NATURAL LANGUAGE PROCESSING, 1 January 1992 (1992-01-01), pages 170-177, XP55040218, US DOI: 10.3115/974499.974531**
• **ALEXANDER HOGENBOOM ET AL: "Semantics-based information extraction for detecting economic events", MULTIMEDIA TOOLS AND APPLICATIONS, 1 January 2012 (2012-01-01), XP55040223, ISSN: 1380-7501, DOI: 10.1007/s11042-012-1122-0**
• **JETHRO BORSJE ET AL: "Semi-Automatic Financial Events Discovery Based on Lexico-Semantic Patterns", INTERNATIONAL JOURNAL OF WEB ENGINEERING AND TECHNOLOGY, vol. 6, no. 2, 1 January 2010 (2010-01-01) , pages 115-140, XP55040226, DOI: 10.1504/IJWET.2010.038242**

**(Cont. next page)**

- MARTINA NAUGHTON ET AL: "Investigating Statistical Techniques for Sentence-Level Event Classification", PROCEEDINGS OF THE 22ND INTERNATIONAL CONFERENCE ON COMPUTATIONAL LINGUISTICS (COLING'08), 1 August 2008 (2008-08-01), pages 617-624, XP55040229, ISBN: 978-1-90-559344-6
- WANG Y-Y ET AL: "COMBINATION OF STATISTICAL AND RULE-BASED APPROACHES FOR SPOKEN LANGUAGE UNDERSTANDING", PROCEEDINGS OF THE INTERNATIONAL CONFERENCE ON SPOKEN LANGUAGEPROCESSING, XX, XX, 1 September 2002 (2002-09-01), pages 609-612, XP009035215,

- HASSAN H. MALIK ET AL: "Accurate Information Extraction for Quantitative Financial Events", PROCEEDINGS OF THE 20TH ACM CONFERENCE ON INFORMATION AND KNOWLEDGE MANAGEMENT, CIKM 201, 28 October 2011 (2011-10-28), pages 2497-2500, XP55040212, DOI: 10.1145/2063576.2064001 ISBN: 978-1-45-030717-8

**Description**

TECHNICAL FIELD

This disclosure relates to representing information from unstructured information, and more particularly to systems and methods for automatically representing information from unstructured documents in a structured format.

BACKGROUND

Today there is an increasing amount of information, predominantly in the form of unstructured textual data included in documents, which is relevant to an investor's decision making process. While this information is voluminous, the effort by which an investor needs to identify terms and comprehend the semantics included in these documents can be painstaking. Although the electronic storage of documents has simplified the process of browsing through multiple and large documents, it remains difficult and time-consuming to browse through large volumes of text to understand and quickly locate information of interest.

For example, corporate press releases typically identify corporate financial events, such as dividends, earnings per share, management and ownership structure, etc., in unstructured (e.g., free form) text along with additional information. Parsing through this information to identify items of interest is a time consuming process. Further, while most word processing tools do provide a mechanism for searching individual terms in a document, none of these tools provide supplemental information accompanying items of interest.

US 2004/0024769 A1 relates to a method of inducing a top-down hierarchical categorizer. The method includes providing a set of labeled training items. Each labeled training item includes an associated label representing a single category assignment for the training item. A set of unlabeled training items is provided. A prior is associated with the set of unlabeled training items that is independent of any particular feature contained in the unlabeled training items. The prior represents a plurality of possible category assignments for the set of unlabeled training items. A top-down hierarchical categorizer is induced with a machine learning algorithm based on the set of labeled training items, the set of unlabeled training items, and the prior.

US 2011/0066585 A1 relates to a "unstructured event parser". The parser analyzes an event that is in unstructured form and generates an event that is in structured form. A mapping phase determines, for a given event token, possible fields of the structured event schema to which the token could be mapped and the probabilities that the token should be mapped to those fields. Particular tokens are then mapped to particular fields of the structured event schema. By using the Naive Bayesian probability model, a "probabilistic mapper" determines, for a particular token and a particular field, the probability that that token maps to that field. The probabilistic mapper can also be used in a "regular expression creator" that generates a regex that matches an unstructured event and a "parameter file creator" that helps a user create a parameter file for use with a parameterized normalized event generator to generate a normalized event based on an unstructured event.

Accordingly, there is a need for improved systems and techniques for providing information, such as facts and events, from unstructured data.

SUMMARY

The invention is defined in the independent claims 1 and 2. Systems and techniques are disclosed for representing information included in unstructured text documents in a structured format. The systems and techniques identify events and information associated with the events in unstructured documents, classify the identified events and information, and represent the identified events and information in a structured format based on a computed classification score. The systems and techniques may also assign a confidence score to identified events, compare the confidence score associated with events to a confidence score associated with a trained confidence model, and represent the identified events and information associated with the events in a structured format based on the comparison.

Various aspects of the systems and techniques relate to computing probability values and combining probability values to generate a classification score.

For example, according to one aspect, a method includes identifying attributes of an event included in an unstructured text document, each of the identified attributes similar to at least one event attribute included in a set of pre-defined event attributes, generating document features for each of the identified attributes, and applying at least one of a plurality of classifiers to each of the generated features. The at least one classifier previously trained using a pre-defined event attribute corresponding to the identified event attribute.

The method also includes computing a probability value from a classifier score generated by the at least one classifier using a probability estimation model, the probability value indicating a likelihood of the identified event attribute corresponding to one of the set of pre-defined event attributes, combining a plurality of computed probability values associated with the identified attributes to generate a classification score, and representing, from the unstructured text document, the event and the identified attributes into a structured format based at least in part on the classification score.

In one embodiment, the method further includes assigning a confidence score to the event using at least one confidence model, comparing the confidence score associated with the event to a confidence score associated with a trained confidence model, and representing, from the unstructured text document, the event and identified attributes in the structured format based on the comparison.

In yet another aspect, a method includes accessing an unstructured text document to identify an event and a set of attributes associated with the event, the set of attributes being related to a set of predefined event attributes, and generating a set of document features associated with the set of attributes, the set of document features having a higher number of set elements than the set of attributes. For a first document feature in the set of document features, the method includes generating a first classifier score, the first classifier score being generated with a classifier having been previously trained using the set of predefined event attributes, and based upon the first classifier score, computing a first probability value using a probability estimation model, the first probability value indicating a likelihood that a first event attribute from the set of event attributes corresponds to the set of predefined event attributes.

The method also includes, for a second document feature in the set of document features, generating a second classifier score, the second classifier score being generated with the classifier, and based upon the second classifier score, computing a second probability value using the probability estimation model, the second probability value indicating a likelihood that a second event attribute from the set of event attributes corresponds to the set of predefined event attributes.

The method further includes generating a classification score using a first probability value and the second probability value, and based upon the classification score, representing from the unstructured text document, the event and the set of attributes in a structured data format.

A system, as well as articles that include a machine-readable medium storing machine-readable instructions for implementing the various techniques, are disclosed. Details of various implementations are discussed in greater detail below.

Additional features and advantages will be readily apparent from the following detailed description, the accompanying drawings and the claims.

BRIEF DESCRIPTION OF THE DRAWINGS

FIG. 1 is a schematic of an exemplary computer-based system for representing information from an unstructured text document.
FIG. 2 illustrates an exemplary method for training the computer-based system shown in FIG. 1.
FIG. 3 illustrates an exemplary method for representing information from an unstructured text document.
FIG. 4 illustrates an exemplary user interface for training the computer-based system of FIG. 1.

Like reference symbols in the various drawings indicate like elements.

DETAILED DESCRIPTION

The present invention includes methods and systems which facilitate automatic extraction (e.g., representation) of events (e.g., facts) and identified attributes of events (e.g., information relating to the events) from unstructured data into a structured data format. Examples of unstructured data that may be used with the present invention include, but are not limited to, books, journals, documents, metadata, health records, financial records, and unstructured text such as news reports, a corporate press release, the body of an e-mail message, a Web page, as well as word processor documents.

Structured data formats specify how data is to be organized and include rules that standardize the structure and content of information. Example structured data formats generated by the present invention include, but are not limited to, eXtensible Markup Language (XML), extensible Business Reporting Language (XBRL), Hypertext Markup Language (HTML), and other data formats having a published specification document.

The methods and systems are particularly beneficial in scenarios in which a financial event is included in unstructured text along with multiple other facts, some of which relate to the financial event and some of which do not relate to the financial event.

For example, a corporate press release may include an event such as a stock dividend announcement that has associated with it a period of time in which the stock dividend is payable and an entity name identifying the business concern paying the stock dividend, which is of interest to a market professional. The press release may also include additional information unrelated to the dividend event, such as new employee benefit information, which may be of less interest to the market professional. Using the present invention, the market professional does not need to spend the time reading the entire press release and culling through the new employee benefit information, as the dividend and related information which is of interest to the market professional can be automatically provided to the market professional in one of several structured data formats.

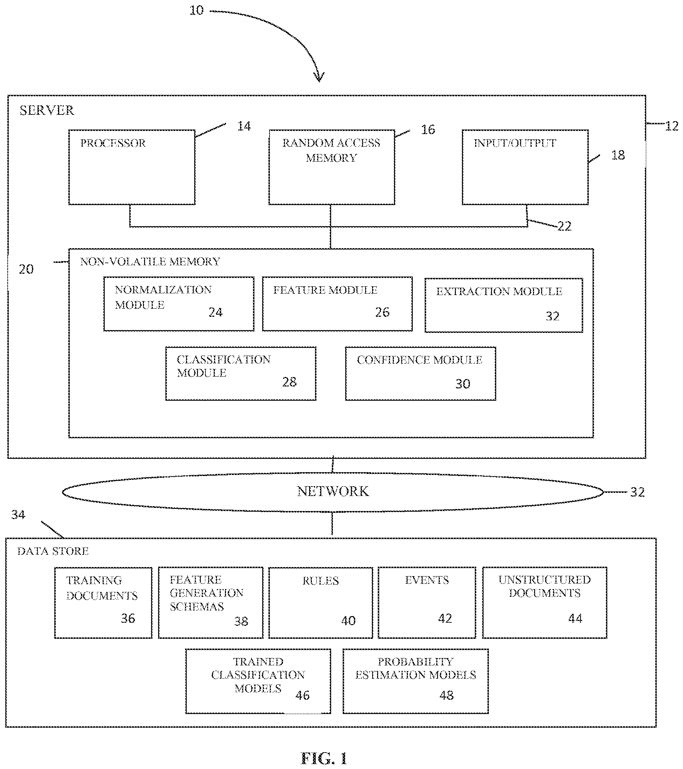

Turning now to FIG. 1, an example of a suitable computing system 10 within which embodiments of the present invention may be implemented is disclosed. The computing system 10 is only one example and is not intended to suggest any limitation as to the scope of use or functionality of the invention. Neither should the computing system 10 be interpreted as having any dependency or requirement relating to any one or combination of illustrated components.

For example, the present invention is operational with numerous other general purpose or special purpose computing consumer electronics, network PCs, minicomputers, mainframe computers, laptop computers, as well as distributed computing environments that include any of the above systems or devices, and the like.

The invention may be described in the general context of computer-executable instructions, such as program modules, being executed by a computer. Generally, program modules include routines, programs, objects, components, data structures, loop code segments and constructs, etc. that perform particular tasks or implement particular abstract data types. The invention can be practiced in distributed computing environments where tasks are performed by remote processing devices that are linked through a communications network. In a distributed computing environment, program modules are located in both local and remote computer storage media including memory storage devices. Tasks performed by the programs and modules are described below and with the aid of figures. Those skilled in the art can implement the description and figures as processor executable instructions, which can be written on any form of a computer readable media.

In one embodiment, with reference to FIG. 1, the system 10 includes a server device 12 configured to include a processor 14, such as a central processing unit ('CPU'), random access memory ('RAM') 16, one or more input-output devices 18, such as a display device (not shown) and keyboard (not shown), and non-volatile memory 20, all of which are interconnected via a common bus 22 and controlled by the processor 14.

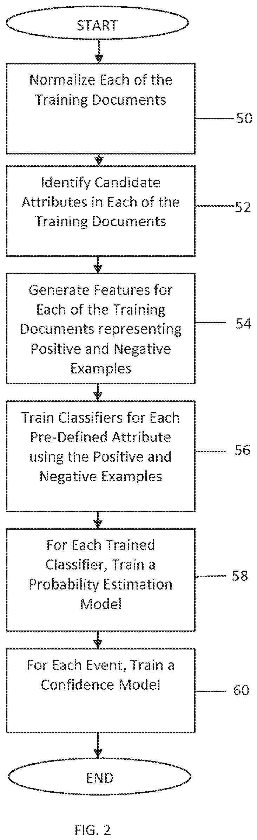

As shown in the FIG. 1 example, in one embodiment, the non-volatile memory 20 is configured to include a normalization module 24 for identifying, from an unstructured text document, attributes of an event, such as currencies, financial qualifiers, time periods, delimiters, entity names, and other items of significance in the financial domain, a feature module 26 for generating document features (e.g., numerical vectors) that describe items, such as words, terms, punctuations, etc., that occur in the unstructured text document, a classification module 28 for categorizing a set of document features and assigning a classification score to items that occur in the unstructured text document, a confidence module 30 for determining an accuracy in identifying the event from the unstructured text document, and an extraction module 32 for representing the event and any identified attributes of the event from the unstructured text document in a structured data format. As used herein, the words 'set' and 'sets' refer to anything from a null set to a multiple element set. Additional details of these modules 24, 26, 28, 30 and 32 are discussed in connection with FIGS. 2, 3 and 4.

A network 32 is provided that can include various devices such as routers, server, and switching elements connected in an Intranet, Extranet or Internet configuration. In one embodiment, the network 32 uses wired communications to transfer information between an access device (not shown), the server device 12, and a data store 34. In another embodiment, the network 32 employs wireless communication protocols to transfer information between the access device, the server device 12, and the data store 34. In yet other embodiments, the network 32 employs a combination of wired and wireless technologies to transfer information between the access device, the server device 12, and the data store 34.

The data store 34 is a repository that maintains and stores information utilized by the before-mentioned modules 24, 26, 28, 30 and 32. In one embodiment, the data store 34 is a relational database. In another embodiment, the data store 34 is a directory server, such as a lightweight Directory Access Protocol ('LDAP'). In yet another embodiment, the data store 34 is an area of noti-volatile memory 20 of the server 12.

As shown in the FIG. 1 example, in one embodiment, the data store 34 includes a set of training documents 36 that are used by the classification module 28 to train multiple binary classifiers on event attributes, a plurality of feature generation schemas 38 are provided that are applied by the feature module 26 to generate document features for the set of training documents 36 and the set of unstructured documents 44, and a set of pre-defined rules 40 are provided that are applied by the classification module 28 if an attribute included in one of a set of unstructured documents is positively identified.

The data store 34 also includes a set of pre-defined events 42. Each one of the pre-defined events 42 includes at least one pre-defined event attribute associated therewith. For example, in one embodiment, a pre-defined event entitled 'Dividend' has associated with it the following predefined event attributes: an amount, a period, and a qualifier. In one embodiment, each of the pre-defined event attributes is associated with a unique identifier in the system. The data store 34 also includes one or more trained confidence models 46 that provide an accuracy determination of events identified in the set of unstructured documents 44, which in one embodiment, may include one or more news items received over a real-time data feed, and probability estimation models 48 to compute probability values from classification scores computed by the classification module 28. Additional details of the information included in the data store 34 are discussed in greater detail below.

Although the data store 34 shown in FIG. 1 is connected to the network 32, it will be appreciated by one skilled in the art that the data store 34 and/or any of the information 36-48 shown in FIG. 1, can be distributed across various servers and be accessible to the server 12 over the network 32, be coupled directly to the server 12, or be configured in an area of non-volatile memory 20 of the server 12.

Further, it should be noted that the system 10 shown in FIG. 1 is only one embodiment of the disclosure. Other system embodiments of the disclosure may include additional structures that are not shown, such as secondary storage and additional computational devices. In addition, various other embodiments of the disclosure include fewer structures than those shown in FIG. 1. For example, in one embodiment, the disclosure is implemented on a single computing device in a non-networked standalone configuration. Data input is communicated to the computing device via an input device, such as a keyboard and/or mouse. Data output of the system is communicated from the computing device to a display device, such as a computer monitor.

Turning now to FIG. 2, an example method for training the computer-based system shown in FIG. 1 is disclosed. First, at step 50, the non-nalization module 24 normalizes each document in the set of training documents 36. In one embodiment, normalization of each document includes identifying tokens of significance (e.g., words, phrases, sequences of letters, numbers and special characters) from the financial domain for each of the set of training documents.

Next, at step 52, the normalization module 24 identifies candidate attributes in each of the training documents. As used herein, the term 'candidate attribute' refers to a word, phrase, or other token of significance that may relate to a pre-defined attribute associated with one of the pre-defined events 42 in the system. For example, in one embodiment, candidate attributes include, but are not limited to, currencies, financial qualifiers, time periods, delimiters, and entity names included in each of the training documents. The normalization module 24 then assigns each identified token of significance a unique identifier within each training document.

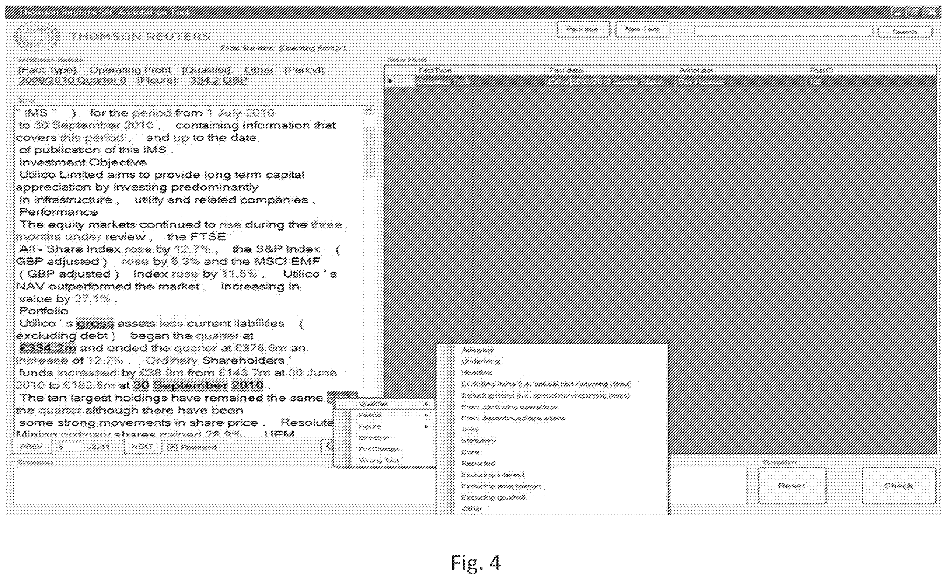

Referring to FIG. 4, in one embodiment, the normalization module 24 provides a user interface that displays each normalized training document to a user, such as a human expert. The normalization module 24 displays each identified candidate attribute as a marked-up/tagged portion of text within each training document. As shown in the FIG. 4 example, the expert may identify marked-up/tagged portions of text, represented in the system by the unique identifier, that are positive for (e.g., correspond to) any attribute in the set of pre-defined event attributes associated with events 42. The normalization module 24 then generates a pair $(MT_{ij}, S_k)$ representing the jth marked-up/tagged portion of text M in document $T_i$ that is positive for a pre-defined event attribute $S_k$. The set of all such pairs P are then stored by the normalization module 24 in the data store 34.

In one embodiment, for each pre-defined event attribute $S_k$, the normalization module 24 identifies positive examples and negative examples from the set of training documents 36. The positive examples are all pairs in the set of pairs P that correspond to one of the pre-defined event attributes $S_k$. Negative examples are all pairs in P that do not correspond to the pre-defined event attribute $S_{k,,}$ but have a similar attribute type as $S_k$. For example, if $S_k$ is a numeric dividend value, all other numeric values are identified as negative examples.

Referring back to FIG. 2, once positive and negative examples are determined, at step 54, the feature module 26 generates one or more document features for each of the identified positive and negative examples. In one embodiment, the feature module 26 generates one or more document features (e.g., numerical vectors) on a portion of unstructured text (e.g., the marked-up/tagged text) surrounding a potential (e.g., a candidate) event attribute of each positive and negative example. The size of the portion of unstructured text is user-configurable. For example, referring to the below example of unstructured text, the portion of unstructured text surrounding the candidate event attribute "*0.45p*" is "*Board is recommending, subject to shareholder approval, a total dividend for the year of 0.45p per share (2009: 0.4p per share)*".

The feature module 26 of the present invention utilizes a plurality of feature generation schemas 38 (e.g., algorithms) to generate document features for positive and negative examples. For example, in one embodiment, the feature generation schemas include, but are not limited to, the following schemas: 'Bag-of-Words', 'Distance-Farthest/Distance-Closest', 'Before-Or-After', 'Qualifier-Present', 'Delimiter-Present', 'Figure-Value-Threshold', 'N-Grams', 'Title-Words', 'Period-in-Context', 'Closest-Single-Matching-Tag', and 'Log-of-the-Value-for-Figure-based-Attributes'.

The feature module 26 uses the Bag-of-Words schema to generate a document feature for each unique word, phrase, or normalized text that occurs in a portion of unstructured text including the marked-up/tagged information, and assigns a feature value to the generated document feature based on a number of times each unique word, phrase, or normalized text, respectively, occurs in the portion of unstructured text. For example, referring to the before-mentioned example of unstructured text, unigrams extracted include 'Board', 'is', 'recommending', 'subject', etc.

The feature module 26 uses the Distance-Farthest/Distance-Closest schema to generate a document feature for marked-up/tagged information. In one embodiment, the feature module 26 compares the tagged information to a plurality of pre-defined text associated with the set of pre-defined event attributes, and then generates a document feature for the tagged information based on the comparison. The feature module 26 then assigns a feature value to the generated document feature representing a spatial distance between the marked-up/tagged information and a candidate attribute.

For example, referring to the before-mentioned example of unstructured text, if the words "recommending" and "dividend" are part of the pre-defined text associated with the set of pre-defined event attributes, feature values assigned to the generated document feature would be 11/21 and 5/21, where 11 and 5 are word distances from the candidate attribute '.45p' and twenty-one (21) represents the number of words in the before-mentioned example of unstructured text.

The feature module 26 uses the Before-Or-After schema to generate a document feature for marked-up/tagged information that occurs in a list of pre-defined text associated with pre-defined event attributes. In one embodiment, the feature module 26 compares the marked-up/tagged information to a plurality of pre-defined text associated with the set of pre-defined event attributes, generates the document feature for the marked-up/tagged information based on the comparison, and then assigns a first feature value, for example a numeric one (1), to the generated document feature if the marked-up/tagged information is included in the plurality of pre-defined text and the marked-up/tagged information occurs after the candidate attribute in the portion of unstructured text. The feature module 26 assigns a second feature value, for example a negative one (-1), to the generated document feature if the marked-up/tagged information is included in the plurality of pre-defined text occurs before the at least one candidate attribute in the portion of unstructured text, and assigns a third feature value, for example a zero (0), to the generated document feature if the tagged information is not included in the plurality of pre-defined text.

For example, referring to the before-mentioned example of unstructured text, if the phrases "per share" and "recommending" are part of the pre-defined text associated with a figure event attribute, the feature module 26 assigns a feature value of one (1) and negative one (-1), respectively, as "per share" occurs in the example text after the figure candidate attribute and "recommending" occurs in the example text before the figure candidate attribute.

The feature module 26 uses the Qualifier-Present schema to generate a document feature for qualifying terms (e.g., terms that differentiate, characterize, or distinguish the candidate attribute) that occur in the portion of unstructured text. In one embodiment, the feature module 26 identifies qualifier text included in the portion of unstructured text, generates a document feature for the identified qualifier text, and then assigns a feature value to the generated document feature representing whether the identified qualifier text is included in a plurality of pre-defined qualifier text associated with the set of pre-defined event attributes.

For example, referring to the before-mentioned example of unstructured text, if the pre-defined qualifier text includes the words "total", "final", "interim" and "basic", the feature module 26 may assign feature values to generated document features of one (1), zero(0), zero(0) and zero (0), respectively, as only the word "total" is present in the example unstructured text.

The feature module 26 uses the Delimiter-Present schema to generate a document feature for each delimiter (e.g., comma, colon, parenthesis, period, etc.) that occurs in the portion of unstructured text. In one embodiment, the feature module 26 identifies a delimiter included in the portion of unstructured text, generates a document feature for the identified delimiter, and then assigns a feature value to the generated document feature representing whether the identified delimiter is included in a plurality of pre-defined delimiters associated with the set of pre-defined event attributes.

The feature module 26 uses the Figure-Value-Threshold schema to generate document features for numerical event attributes. In one embodiment, the feature module 26 identifies a numerical event attribute included in the portion of unstructured text, generates a document feature for the identified numerical event attribute, compares the numerical event attribute to a pre-defined threshold value; and assigns a feature value to the generated document feature based on the comparison. The feature module 26 may assign a feature value of one (1) if the numerical event attribute does not exceed the threshold value and assign a feature value of zero (0) if the numerical event attribute exceeds the threshold value.

The feature module 26 uses the N-Grams schema to generate a document feature for each unique N-Gram (e.g., bi-gram, tri-gram, etc..) that occurs in the portion of unstructured text and uses the number of times the N-Gram occurs in the portion of unstructured text window as a document feature frequency. In one embodiment, the feature module 26 identifies each unique N-Gram included in the portion of unstructured text, generates a document feature for each of the identified N-Grams, and then assigns a feature value to the generated document feature based on a frequency each identified unique N-gram occurs in the portion of unstructured text.

For example, referring to the before-mentioned example of unstructured text and using Bi-grams, the feature module 26 using the N-Grams schema would generate the following as document features: "Board is", "is recommending", "per share", etcetera.

The feature module 26 uses the Title-words schema to generate a document feature for marked-up/tagged information that occurs both in a title of the unstructured text and the portion of unstructured text. For example, in one embodiment, the feature module 26 generates a document feature for the marked-up/tagged information, and assigns a feature value to each generated document feature representing whether the tagged information is included in a title associated with the unstructured text document and also included in a plurality of pre-defined text associated with the set of pre-defined event attributes.

The feature module 26 uses the Period-in-Context schema to generate document features for period-dependent fact types, and assigns a feature value to generated document features based on whether a period identified from a document context (e.g., a document title or metadata) corr-spoiids to the period specified in the portion of unstructured text. In one embodiment, the feature module 26 identifies a period-dependent attribute from a context of the unstructured text document, the context defined by one of a title associated with the unstructured text document and metadata associated with the unstructured text document, generates a document feature for the period-dependent attribute, and assigns a first feature value to the generated document feature if the period-dependent attribute is included in the portion of unstructured text.

The feature module 26 uses the Closest-Single-Matching-Tag schema to generate a document feature for marked-up/tagged information that occurs nearest to the candidate attribute, on its left of right respectively. For example, in one embodiment, the feature module 26 generates a document feature for marked-up/tagged information nearest to a candidate attribute included in the portion of unstructured text, and assigns a feature value to the generated document feature based on a numerical index of nearest tagged information to the at least one candidate attribute.

The feature module 26 uses the Log-of-the-Value-for-Figure-based-Attributes schema to generate feature values that represent the log of the actual value of figure-based candidate attributes. In one embodiment, the feature module 26 identities a numerical event attribute included in the portion of unstructured text, generates a document feature for the identified numerical event attribute, and assigns a feature value to the generated document feature based on a logarithm of the numeric event attribute.

In one embodiment, once a plurality of document features are generated, the feature module 26 normalizes the feature values obtained using some or all of the above-described feature generation schemas. In one embodiment, the feature module 26 normalizes the assigned feature values using Term Frequency-Inverse Document Frequency (TF-IDF). In another embodiment, the feature module 26 normalizes assigned feature values using other normalization schemes.

Referring to FIG. 2, once the feature module 26 generates the document features for positive and negative examples, at step 56, the classification module 28 uses the positive and negative examples to train multiple binary classifiers for each pre-defined event attribute type. In one embodiment, each of the binary classifiers uses a different classification algorithm, set of generated document features, and/or a different subset of training documents. Next, at step 58, for each trained classifier, the classification module 28 trains a probability estimation model using one of several existing schemes. For example, in one embodiment, the classification module 28 trains the probability estimation model using a Isotonic Regression technique. In another embodiment, the classification module 28 trains the probability estimation model using a probability estimation scheme.

Next, at step 60, for each event in the set of events 42, the confidence module 60 constructs a confidence model. In one embodiment, the confidence module 60 constructs the confidence model by first computing n-gram counts, n being configurable, for each unique n-gram that occurs in any of the portions of unstructured text in the set of training documents 36 that correspond to pre-defined event attributes in the set of events 42. Next, the confidence module 60 assigns a confidence score to each portion of the unstructured text. The confidence score being an average of all n-gram counts associated with each portion of the unstructured text. Next, the confidence module 60 computes statistical properties for each of the portions of unstructured text using the confidence scores. The statistical properties include, but are limited to, an average, maximum, minimum, and standard deviation of all confidence score. The confidence module 60 then generates a first corpus of documents and a second corpus of documents based on these statistical properties. The first corpus includes portions of unstructured text from the set of training documents 36 that are a true positive for pre-defined event attributes. The second corpus of documents includes portions of unstructured text from the set of training documents 36 that are false positive instances for pre-defined event attributes.

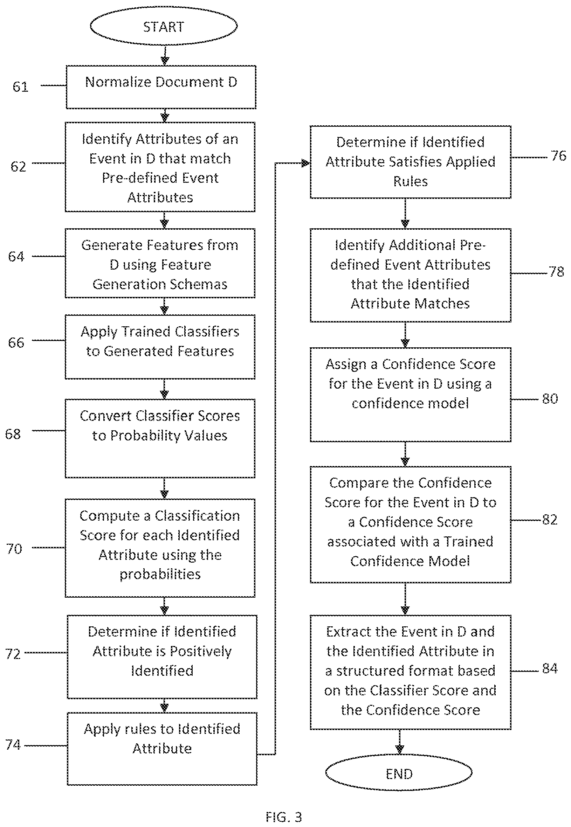

Referring now to FIG. 3, an exemplary method for representing information from an unstructured text document is disclosed. As shown in the FIG. 3 example, at step 61, the normalization module 24 normalizes at least one of the set of unstructured documents 44. As described previously, the set of unstructured documents may be an unstructured text document D received over a real-time news feed. In one embodiment, the normalization module 24 normalizes document D by identifying a candidate attribute included in the unstructured text document, associating a unique identifier with the candidate attribute, comparing the candidate attribute to each of the set of pre-defined event attributes, and storing the candidate attribute, the unique identifier, and at least one of the pre-defined event attributes based on the comparison. The candidate attributes may be keywords, sequences of letters, numbers, and characters, which are defined in a financial domain.

Next, at step 62, the normalization module 24 identifies attributes of an event included in the unstructured text document D. Each of the identified attributes is at least similar to at least one event attribute included in a set of pre-defined event attributes defined in the set of events 42. Next, at step 64, the feature module 26 generates document features from the unstructured text document using one or more of the feature generation schemas discussed previously.

For example, in one embodiment, the feature module 26 may apply the Bag-of-Words feature generation schema by generating a document feature for each unique word, phrase, or normalized text occurring in a portion of the unstructured text document, and assigning a feature value to the generated document feature based on a number of times each of the word, phrase, or normalized text, respectively, occurs in the portion of the unstructured text document.

The feature module 26 may also apply the Distance-Farthest/Distance-Closest feature generation schema by identifying text neighboring one of the identified attributes from a plurality of pre-defined text associated with the set of pre-defined event attributes, generating a document feature for the identified neighboring text, and assigning a feature value to the generated document feature representing a spatial distance between the identified neighboring text and the one of the identified attributes.

In one embodiment, for example, the feature module 26 may apply the Before-Or-After feature generation schema by identifying text neighboring one of the identified attributes, generating a document feature for the identified neighboring text, assigning a first feature value to the generated document feature if the identified neighboring text is included in a plurality of pre-defined text associated with the set of pre-defined event attributes and the identified neighboring text occurs after the identified attribute in the portion of unstructured text.

The feature module 26 may also assign a second feature value to the generated document feature if the identified neighboring text is included in the plurality of pre-defined text associated with the set of pre-defined event attributes and the identified neighboring text occurs before the identified attribute in the portion of unstructured text. A third feature value may be assigned by the feature module 26 to the generated document feature if the identified neighboring text is not included in the plurality of pre-defined text associated with the set of pre-defined event attributes .

The feature module 26 may apply the Qualifier-Present feature generation schema by identifying qualifier text included in the portion of unstructured text, generating a document feature for the identified qualifier text, and assigning a feature value to the generated document feature representing whether the identified qualifier text is included in a plurality of pre-defined qualifier text associated with the set of pre-defined event attributes.

In one embodiment, the feature module 26 may apply the Delimiter-Present feature generation schema by identifying a delimiter included in the portion of unstructured text, generating a document feature for the identified delimiter, and assigning a feature value to the generated document feature representing whether the identified delimiter is included in a plurality of pre-defined delimiters associated with the set of pre-defined event attributes.

The feature module 26 may apply the Figure-Value-Threshold feature generation schema by identifying a numerical event attribute included in the portion of unstructured text, generating a document feature for the identified numerical event attribute, comparing the numerical event attribute to a pre-defined threshold value, and assigning a feature value to the generated document feature based on the comparison.

In one embodiment, the feature module 26 may apply the N-Grams feature generation schema by identifying each unique N-Gram included in the portion of unstructured text, generating a document feature for each of the identified N-Grams, and assigning a feature value to the generated document feature based on a frequency each identified unique N-gram occurs in the portion of unstructured text.

The feature module 26 may apply the Title-words feature generation schema by identifying text neighboring one of the identified attributes, generating a document feature for the identified neighboring text, and assigning a feature value to the generated document feature representing whether the identified neighboring text is included in a title associated with the unstructured text document and a plurality of pre-defined text associated with the set of pre-defined event attributes.

In one embodiment, for example, the feature module 26 may apply the Period-in-Context feature generation schema by identifying a period-dependent attribute from a context of the unstructured text document, the context defined by a title associated with the unstructured text document or metadata associated with the unstructured text document, generating a document feature for the period-dependent attribute, and assigning a first feature value to the generated document feature if the period-dependent attribute is included in the portion of unstructured text.

The feature module 26 may apply the Closest-Single-Matching-Tag feature generation schema by generating a document feature for neighboring text nearest to the identified attribute in the portion of unstructured text, and assigning a first feature value to the generated document feature based on a numerical index of the nearest neighboring text to the identified attribute.

In yet another embodiment, the feature module 26 may apply the Log of the Value for Figure-based-Attributes feature generation schema by identifying a numerical event attribute included in the portion of unstructured text, generating a document feature for the identified numerical event attribute, and assigning a feature value to the generated document feature based on a logarithm of the numerical event attribute.

Next, as shown in step 66 of FIG. 3, the classification module 28 applies at least one of a plurality of classifiers to each of the generated document features. The at least one classifier previously trained using a pre-defined event attribute corresponding to the identified event attribute. Next, at step 68, the classification module 28 computes a probability value from a classifier score generated by the at least one classifier using one of the previously trained probability estimation models. The computed probability value indicating a likelihood of the identified event attribute corresponding to one of the set of pre-defined event attributes.

At shown in step 70, the classification module 28 next computes a classification score for each identified attribute in D using the computed probability values. In one embodiment, the classification module 28 computes the classification score by combining the results of classifiers. For example, in one embodiment, the classification module 28 normalizes and/or converts raw scores assigned by the classifiers to probabilities using a normalization or probability estimation scheme. In one embodiment, the classification module 28 uses isotonic regression in normalizing the raw scores, but other estimation schemes known in the art may also be utilized by the classification module 28. These normalized scores are then combined into a single score as a weighted linear combination. In one embodiment, the classification module 28 determines the weights empirically. In another embodiment, the classification module 28 determines the weights by applying cross validation on each identified attribute.

Next, at step 72, the classification module 28 determines whether the identified attribute in D has been positively identified as an attribute in the set of pre-defined event attributes. If the classification module 28 determines that the identified in D is positively identified, at step 74, the classification module applies at least one of the set of pre-defined rules 40 to the identified attribute. Each one of the set of pre-defined rules 40 identifies patterns in portions of text neighboring the event in D.

For example, referring to the below example portion of text neighboring the figure event attribute of "1.1p per share", as identified by a classifier:
"A dividend of **1.1p per share** totaling £2.1m in respect of the period ended 1 October 2006 ***was paid*** in this period"
an example pre-defined rule is set forth below:
".*****candidateToken.*****(*was|previously)[ ] + (paid|proposed|declared|recommended).*****".

In one embodiment, the example pre-defined rule is a *regular expression rule* that identifies numerical figures for dividends that have been paid or declared earlier and are hence not considered news by the system. In one embodiment, the pre-defined rule returns a value of true if the figure event attribute (1. 1p per share) is followed by the words "was paid, was declared, was proposed or was recommended".

Conditional rules may also be included in the set of pre-defined rules 40. For example, in one embodiment, dates are identified in the context of identified attributes and are compared to the date or period of published news text. If the date belongs to a previous period, then the rule returns true, indicating that the dates relate to older information.

Next, at step 76, if the classification module 28 determines that the identified attribute satisfies one or more applied rules, at step 78, the classification module 28 identifies any additional pre-defined event attributes that correspond to the identified attribute.

Next, at step 80, the confidence module 30 assigns a confidence score for the event in D using one of the previously trained confidence models. Once the confidence score is assigned, at step 82, the confidence module 30 compares the confidence score assigned to the event with a confidence score associated with a trained confidence model. Based on the comparison, at step 84, the extraction module 32 represents the event from the unstructured text document D and one or more identified attribute in a structured format based on the classifier score and the confidence score

In one embodiment, the confidence module 30 computes the confidence score associated with the event by averaging all N-gram counts derived from a portion of unstructured text neighboring and including the event in D. The confidence module 30 then compares the computed confidence score associated with the event to a prior-estimated average associated with at least one event attribute included in the set of pre-defined event attributes. In one embodiment, the confidence module 30 determines how many standard deviations above or below the prior-estimated average the computed confidence score is. The confidence module 30 then assigns the confidence score to the event based on the comparison.

In another embodiment, the confidence module 30 determines, if the confidence score exceeds a threshold value, whether an identified event attribute included in the portion of unstructured text is likely to be identified by a model M trained on the before-mentioned first corpus or second corpus of documents. As discussed previously, the first corpus of documents includes unstructured text from the set of training documents 36 previously determined to be a true positive for the event attribute and the second corpus of documents includes portions of unstructured text from the set of training documents 36 that are false positive instances for pre-defined event attributes.

In one embodiment, the confidence module 30 computes the likelihood of the event attribute $P_M(c)$ being identified using the first corpus or the second corpus using the following formula:

$$P_M(c) = \sum_{\forall n\text{-}gram\, n\, \in\, c} \log(pgen_M(n))$$

where $pgen_M(n)$ is a probability of a model M trained on the first corpus of unstructured text to generate the n-gram n and is computed by:

$$pgen_M(n) = \frac{S(count_M(n))}{\sum_{\forall i \in M} count(i)}$$

where $S()$ is a Good-Turing smoothing function to account for 0 occurrence n-grams.

If the computed likelihood of the event attribute is less than a threshold probability value associated with the model M trained on the first corpus of unstructured text, the confidence module 30 diminishes the value of the computed confidence score. Otherwise, the confidence module 30 maintains the value of the computed confidence score.

In yet another the embodiment, the confidence module 30 increases the computed confidence score for the event attribute if a binary classifier classifies the portion of unstructured text as being positive for the event attribute, and decreases the computed confidence score for the candidate attribute if the binary classifier classifies the portion of unstructured text as being negative for the event attribute.

Various features of the system may be implemented in hardware, software, or a combination of hardware and software. For example, some features of the system may be implemented in one or more computer programs executing on programmable computers. Each program may be implemented in a high level procedural or object-oriented programming language to communicate with a computer system or other machine. Furthermore, each such computer program may be stored on a storage medium such as read-only-memory (ROM) readable by a general or special purpose programmable computer or processor, for configuring and operating the computer to perform the functions described above.

### Claims

1. A system (10) for automatic extraction from unstructured data intro a structured data format comprising:
   a server (12) including a processor (14) and memory (16, 20) storing instructions that, in response to receiving a first request for access to a service, cause the processor (14) to:

   identify (62) by a normalization module (24) attributes of an event included in an unstructured text document, each of the identified attributes similar to at least one event attribute included in the set of predefined event attributes;
   generate (64) by a feature module (26) document features for each of the identified attributes;
   apply (66) by a classification module (28) at least one of the plurality of classifiers to each of the generated document features, the at least one classifier previously trained using the pre-defined event attribute corresponding to the identified event attribute;
   compute (68) by the classification module (28) a probability value from a classifier score generated by the at least one classifier using a probability estimation model, the probability value indicating a likelihood of the identified event attribute corresponding to one of the set of pre-defined event attributes;
   combine (70) by the classification module (28) a plurality of computed probability values associated with the identified attributes to generate a classification score; and
   extract (84) by an extraction module (32), from the unstructured text document, the event and the identified attributes, wherein the extraction module (32) extracts automatically from the unstructured text document into a structured format based at least in part on the classification score.

2. A method for use in a system for automatic extraction from unstructured data intro a structured data format comprising:

   identifying (62) attributes of an event included in an unstructured text document, each of the identified attributes similar to at least one event attribute included in a set of predefined event attributes;
   generating (64) document features for each of the identified attributes;
   applying (66) at least one of a plurality of classifiers to each of the generated document features, the at least one classifier previously trained using the pre-defined event attribute corresponding to the identified event attribute;
   computing (68) a probability value from a classifier score generated by the at least one classifier using a probability estimation model, the probability value indicating a likelihood of the identified event attribute corresponding to one of the set of pre-defined event attributes;
   combining (70) a plurality of computed probability values associated with the identified attributes to generate a classification score; and
   representing (84), from the unstructured text document, the event and the identified attributes, wherein an extraction module (32) extracts automatically from the unstructured text document into a structured format based at least in part on the classification score.

3. The method of Claim 2, further comprising:

applying (74) at least one rule from a plurality of pre-defined rules to each of the identified attributes; and determining (76) whether each of the identified attributes is similar to at least one event attribute included in the set of predefined attributes based on the at least one rule.

4. The method of Claim 2, further comprising:

assigning (80) a confidence score to the event using at least one confidence model; comparing (82) the confidence score associated with the event to a confidence score associated with a trained confidence model; and representing (84), from the unstructured text document, the event and identified attributes in the structured format based on the comparison.

5. The method of Claim 4, wherein identifying the attributes of the event comprises normalizing (61) the unstructured text document.

6. The method of Claim 5, wherein normalizing (61) the unstructured text document comprises:

identifying (52) a candidate attribute included in the unstructured text document; associating a unique identifier with the candidate attribute;
comparing the candidate attribute to each of the set of pre-defined event attributes;
and
storing the candidate attribute, the unique identifier, and at least one of the predefined event attributes based on the comparison.

7. The method of Claim 6, wherein the candidate attributes are one of keywords, sequences of letters, numbers, and characters, the candidate attributes defined in a financial domain.

8. The method of Claim 4, further comprising:

identifying a portion of unstructured text neighboring and including the event, the portion of unstructured text having a user-configurable text size;
computing the confidence score associated with the event by averaging all N- gram counts derived from the portion of unstructured text;
comparing the computed confidence score associated with the event to a prior estimated average associated with the at least one event attribute included in the set of predefined event attributes; and
assigning the confidence score to the event based on the comparison.

9. The method of Claim 8, further comprising determining, if the confidence score exceeds a threshold value, whether a candidate attribute included in the portion of unstructured text is likely to be identified by a model M trained on a first corpus of unstructured text, the first corpus of unstructured text being a portion of unstructured text determined to be a true positive for the event attribute.

10. The method of Claim 9, wherein the likelihood of the candidate attribute being identified by the model M trained on the first corpus of unstructured text $P_M(c)$ is computed by:

$$P_M(c) = \sum_{\forall n-gram\ n \in c} \log(pgen_M(n))$$

where $pgen_M(n)$ is a probability of the model M trained on unstructured text to generate the n-gram n and is computed by:

$$pgen_M(n) = \frac{S(count_M(n))}{\sum_{\forall i \in M} count(i)}$$

where S ( ) is a Good-Turing smoothing function to account for 0 occurrence n- grams.

**11.** The method of Claim 10, wherein if the computed likelihood of the candidate attribute is less than a threshold probability value associated with the model trained on the first corpus of unstructured text, diminishing the value of the computed confidence score.

**12.** The method of Claim 10, further comprising:

applying a binary classifier to the portion of unstructured text;
increasing the computed confidence score for the candidate attribute if the binary classifier classifies the portion of unstructured text as being positive for the event attribute; and
decreasing the computed confidence score for the candidate attribute if the binary classifier classifies the portion of unstructured text as being negative for the event attribute.

**13.** The method of Claim 2, wherein the probability estimation model uses isotonic regression or a probability estimation scheme and the generated classification score is a weighted linear combination of the plurality of computed probability values.

**14.** The method of Claim 2, wherein generating the document features for each of the identified attributes comprises applying a plurality of feature generation schemas to the identified attributes.

**15.** The method of Claim 2, further comprising training (56) the plurality of classifiers using a plurality of feature generation schemas, a set of training documents each including at least one candidate event, and the set of pre-defined event attributes.

**Patentansprüche**

**1.** System (10) zur automatischen Extrahierung aus unstrukturierten Daten in ein strukturiertes Datenformat, umfassend:
einen Server (12), der einen Prozessor (14) und einen Speicher (16, 20) enthält, der Anweisungen speichert, die als Reaktion auf ein Empfangen einer ersten Anforderung zum Zugriff auf einen Dienst bewirken, dass der Prozessor (14):

durch ein Normierungsmodul (24) Attribute eines in einem unstrukturierten Textdokument enthaltenen Ereignisses identifiziert (62), wobei jedes der identifizierten Attribute mindestens einem Ereignisattribut ähnlich ist, das in der Gruppe von vordefinierten Ereignisattributen enthalten ist;
durch ein Merkmalsmodul (26) Dokumentmerkmale für jedes der identifizierten Attribute generiert (64);
durch ein Klassifizierungsmodul (28) mindestens einen der Vielzahl von Klassifikatoren auf jedes der generierten Dokumentmerkmale anwendet (66), wobei der mindestens eine Klassifikator vorher unter Verwendung des vordefinierten Ereignisattributs trainiert wurde, das dem identifizierten Ereignisattribut entspricht;
durch das Klassifizierungsmodul (28) einen Wahrscheinlichkeitswert aus einer Klassifikatorpunktzahl berechnet (68), die von dem mindestens einen Klassifikator unter Verwendung eines Wahrscheinlichkeitsabschätzungsmodells generiert wurde, wobei der Wahrscheinlichkeitswert eine Likelihood des identifizieren Ereignisattributs anzeigt, das einem der Gruppe von vordefinierten Ereignisattributen entspricht;
durch das Klassifizierungsmodul (28) eine Vielzahl von berechneten Wahrscheinlichkeitswerten kombiniert (70), die mit den identifizierten Attributen assoziiert sind, um eine Klassifizierungspunktzahl zu generieren; und
durch ein Extrahierungsmodul (32) aus dem unstrukturierten Textdokument das Ereignis und die identifizierten Attribute extrahiert (84), wobei das Extrahierungsmodul (32) zumindest teilweise auf Grundlage der Klassifizierungspunktzahl automatisch aus dem unstrukturierten Textdokument in ein strukturiertes Format extrahiert.

**2.** Verfahren zur Verwendung in einem System zur automatischen Extrahierung aus unstrukturierten Daten in ein strukturiertes Datenformat, umfassend:

Identifizieren (62) von Attributen eines in einem unstrukturierten Textdokument enthaltenen Ereignisses, wobei jedes der identifizierten Attribute mindestens einem Ereignisattribut ähnlich ist, das in einer Gruppe von vordefinierten Ereignisattributen enthalten ist;

Generieren (64) von Dokumentmerkmalen für jedes der identifizierten Attribute;

Anwenden (66) mindestens eines einer Vielzahl von Klassifikatoren auf jedes der generierten Dokumentmerkmale, wobei der mindestens eine Klassifikator vorher unter Verwendung des vordefinierten Ereignisattributs trainiert wurde, das dem identifizierten Ereignisattribut entspricht;

Berechnen (68) eines Wahrscheinlichkeitswerts aus einer Klassifikatorpunktzahl, die von dem mindestens einen Klassifikator unter Verwendung eines Wahrscheinlichkeitsabschätzungsmodells generiert wurde, wobei der Wahrscheinlichkeitswert eine Likelihood des identifizieren Ereignisattributs anzeigt, das einem der Gruppe von vordefinierten Ereignisattributen entspricht;

Kombinieren (70) einer Vielzahl von berechneten Wahrscheinlichkeitswerten, die mit den identifizierten Attributen assoziiert sind, um eine Klassifizierungspunktzahl zu generieren; und

Repräsentieren (84), aus dem unstrukturierten Textdokument, des Ereignisses und der identifizierten Attribute, wobei ein Extrahierungsmodul (32) zumindest teilweise auf Grundlage der Klassifizierungspunktzahl automatisch aus dem unstrukturierten Textdokument in ein strukturiertes Format extrahiert.

3. Verfahren nach Anspruch 2, ferner umfassend:

Anwenden (74) mindestens einer Regel von einer Vielzahl von vordefinierten Regeln auf jedes der identifizierten Attribute; und

Ermitteln (76), ob jedes der identifizierten Attribute mindestens einem Ereignisattribut ähnlich ist, das in der Gruppe von vordefinierten Attributen auf Grundlage der mindestens einen Regel enthalten ist.

4. Verfahren nach Anspruch 2, ferner umfassend:

Zuweisen (80) eines Konfidenzwerts zum Ereignis unter Verwendung mindestens eines Konfidenzmodells;

Vergleichen (82) des mit dem Ereignis assoziierten Konfidenzwerts mit einem Konfidenzwert, der mit einem trainierten Konfidenzmodell assoziiert ist; und

Darstellen (84), aus dem unstrukturierten Textdokument, des Ereignisses und der identifizierten Attribute im strukturierten Format auf Grundlage des Vergleichs.

5. Verfahren nach Anspruch 4, wobei das Identifizieren der Attribute des Ereignisses ein Normieren (61) des unstrukturierten Textdokuments umfasst.

6. Verfahren nach Anspruch 5, wobei das Normieren (61) des unstrukturierten Textdokuments umfasst:

Identifizieren (52) eines Attributkandidaten, der im unstrukturierten Textdokument enthalten ist;

Assoziieren einer eindeutigen Kennung mit dem Attributkandidaten;

Vergleichen des Attributkandidaten mit jedem der Gruppe von vordefinierten Ereignisattributen; und

Speichern des Attributkandidaten, der eindeutigen Kennung und mindestens eines der vordefinierten Ereignisattribute auf Grundlage des Vergleichs.

7. Verfahren nach Anspruch 6, wobei die Attributkandidaten eines von Schlüsselwörtern, Folgen von Buchstaben, Ziffern und Zeichen sind, wobei die Attributkandidaten in einem finanziellen Bereich definiert sind.

8. Verfahren nach Anspruch 4, ferner umfassend:

Identifizieren eines Abschnitts von unstrukturiertem Text, der dem Ereignis benachbart ist und dieses enthält, wobei der Abschnitt von unstrukturiertem Text eine benutzerkonfigurierbare Textgröße aufweist;

Berechnen des mit dem Ereignis assoziierten Konfidenzwerts durch Mitteln aller N-Gramm-Anzahlen, die aus dem Abschnitt von unstrukturiertem Text abgeleitet wurden;

Vergleichen des berechneten, mit dem Ereignis assoziierten Konfidenzwerts mit einem vorher geschätzten Mittelwert, der mit dem mindestens einen Ereignisattribut assoziiert ist, das in der Gruppe von vordefinierten Ereignisattributen enthalten ist; und

Zuweisen des Konfidenzwerts zum Ereignis auf Grundlage des Vergleichs.

9. Verfahren nach Anspruch 8, ferner umfassend ein Ermitteln, falls der Konfidenzwert einen Schwellenwert überschreitet, ob es wahrscheinlich ist, dass ein Attributkandidat, der im Abschnitt von unstrukturiertem Text enthalten ist, wahrscheinlich von einem Modell M identifiziert wird, das an einem ersten Korpus aus unstrukturiertem Text trainiert wurde, wobei das erste Korpus aus unstrukturiertem Text ein Abschnitt von unstrukturiertem Text ist, der als ein echtes Positiv für das Ereignisattribut ermittelt wurde.

10. Verfahren nach Anspruch 9, wobei die Likelihood, dass der Attributkandidat vom Modell M identifiziert wird, das am ersten Korpus aus unstrukturiertem Text trainiert wurde $P_M(c)$ berechnet wird durch:

$$P_M(c) = \sum_{\forall n-Gramm\ n \in c} \log(pgen_M(n))$$

wobei $pgen_M(n)$ eine Wahrscheinlichkeit ist, dass das an unstrukturiertem Text trainierte Modell M das n-Gramm n generiert, und berechnet wird durch:

$$pgen_M(n) = \frac{S(anzahl_M(n))}{\sum_{\forall i \in M} anzahl(i)}$$

wobei S ( ) eine Good-Turing-Glättungsfunktion ist, um ein 0-Auftreten von n-Grammen zu berücksichtigen.

11. Verfahren nach Anspruch 10, wobei, falls die berechnete Likelihood des Attributkandidaten kleiner als ein Schwellenwahrscheinlichkeitswert ist, der mit dem am ersten Korpus aus unstrukturiertem Text trainierten Modell assoziiert ist, Vermindern des Werts des berechneten Konfidenzwerts.

12. Verfahren nach Anspruch 10, ferner umfassend:

Anwenden eines binären Klassifikators auf den Abschnitt von unstrukturiertem Text;
Erhöhen des berechneten Konfidenzwerts für den Attributkandidaten, falls der binäre Klassifikator den Abschnitt von unstrukturiertem Text als positiv für das Ereignisattribut klassifiziert; und
Verringern des berechneten Konfidenzwerts für den Attributkandidaten, falls der binäre Klassifikator den Abschnitt von unstrukturiertem Text als negativ für das Ereignisattribut klassifiziert.

13. Verfahren nach Anspruch 2, wobei das Wahrscheinlichkeitsabschätzungsmodell eine isotonische Regression oder ein Wahrscheinlichkeitsabschätzungsschema verwendet und die generierte Klassifizierungspunktzahl eine gewichtete Linearkombination der Vielzahl von berechneten Wahrscheinlichkeitswerten ist.

14. Verfahren nach Anspruch 2, wobei das Generieren der Dokumentmerkmale für jedes der identifizierten Attribute ein Anwenden einer Vielzahl von Merkmalsgenerierungsschemata auf die identifizierten Attribute umfasst.

15. Verfahren nach Anspruch 2, ferner umfassend ein Trainieren (56) der Vielzahl von Klassifikatoren unter Verwendung einer Vielzahl von Merkmalsgenerierungsschemata, wobei eine Gruppe von Trainingsdokumenten jeweils mindestens einen Ereigniskandidaten und die Gruppe von vordefinierten Ereignisattributen enthält.

## Revendications

1. Système (10) pour une extraction automatique à partir de données non structurées dans un format de données structuré comprenant :
un serveur (12) comprenant un processeur (14) et une mémoire (16, 20) stockant des instructions qui, en réponse à la réception d'une première demande pour un accès à un service, amènent le processeur (14) à :

identifier (62), par un module de normalisation (24), des attributs d'un événement compris dans un document de texte non structuré, chacun des attributs identifiés étant similaire à au moins un attribut d'événement compris dans l'ensemble d'attributs d'événement prédéfinis ;
générer (64), par un module de caractéristiques (26), des caractéristiques de document pour chacun des attributs identifiés ;
appliquer (66), par un module de classification (28), au moins l'un de la pluralité de classificateurs à chacune des caractéristiques de document générées, l'au moins un classificateur étant préalablement entraîné à l'aide de l'attribut d'événement prédéfini correspondant à l'attribut d'événement identifié ;

calculer (68), par le module de classification (28), une valeur de probabilité à partir d'un score de classificateur généré par l'au moins un classificateur à l'aide d'un modèle d'estimation de probabilité, la valeur de probabilité indiquant une probabilité de l'attribut d'événement identifié correspondant à l'un de l'ensemble d'attributs d'événement prédéfinis ;

combiner (70), par le module de classification (28), une pluralité de valeurs de probabilité calculées associées aux attributs identifiés pour générer un score de classification ; et

extraire (84), par un module d'extraction (32), à partir du document de texte non structuré, l'événement et les attributs identifiés, le module d'extraction (32) réalisant automatiquement une extraction à partir du document de texte non structuré dans un format structuré sur la base, au moins en partie, du score de classification.

2. Procédé destiné à être utilisé dans un système pour une extraction automatique à partir de données non structurées dans un format de données structuré comprenant :

identifier (62) des attributs d'un événement compris dans un document de texte non structuré, chacun des attributs identifiés étant similaire à au moins un attribut d'événement compris dans un ensemble d'attributs d'événement prédéfinis ;

générer (64) des caractéristiques de document pour chacun des attributs identifiés ;

appliquer (66) au moins l'un d'une pluralité de classificateurs à chacune des caractéristiques de document générées, l'au moins un classificateur étant préalablement entraîné à l'aide de l'attribut d'événement prédéfini correspondant à l'attribut d'événement identifié ;

calculer (68) une valeur de probabilité à partir d'un score de classificateur généré par l'au moins un classificateur à l'aide d'un modèle d'estimation de probabilité, la valeur de probabilité indiquant une probabilité de l'attribut d'événement identifié correspondant à l'un de l'ensemble d'attributs d'événement prédéfinis ;

combiner (70) une pluralité de valeurs de probabilité calculées associées aux attributs identifiés pour générer un score de classification ; et

représenter (84), à partir du document de texte non structuré, l'événement et les attributs identifiés, un module d'extraction (32) réalisant automatiquement une extraction à partir du document de texte non structuré dans un format structuré sur la base, au moins en partie, du score de classification.

3. Procédé selon la revendication 2, comprenant en outre :

appliquer (74) au moins une règle à partir d'une pluralité de règles prédéfinies à chacun des attributs identifiés ; et déterminer (76) si chacun des attributs identifiés est ou non similaire à au moins un attribut d'événement compris dans l'ensemble d'attributs prédéfinis sur la base de l'au moins une règle.

4. Procédé selon la revendication 2, comprenant en outre :

affecter (80) un score de confiance à l'événement à l'aide d'au moins un modèle de confiance ;

comparer (82) le score de confiance associé à l'événement à un score de confiance associé à un modèle de confiance entraîné ; et

représenter (84), à partir du document de texte non structuré, l'événement et les attributs identifiés dans le format structuré sur la base de la comparaison.

5. Procédé selon la revendication 4, dans lequel l'identification des attributs de l'événement comprend la normalisation (61) du document de texte non structuré.

6. Procédé selon la revendication 5, dans lequel la normalisation (61) du document de texte non structuré comprend :

identifier (52) un attribut candidat compris dans le document de texte non structuré ;

associer un identificateur unique à l'attribut candidat ;

comparer l'attribut candidat à chacun de l'ensemble d'attributs d'événement prédéfinis ; et

stocker l'attribut candidat, l'identificateur unique et au moins l'un des attributs d'événement prédéfinis sur la base de la comparaison.

7. Procédé selon la revendication 6, dans lequel les attributs candidats sont l'un parmi des mots-clés, des séquences de lettres, des nombres et des caractères, les attributs candidats étant définis dans un domaine financier.

**8.** Procédé selon la revendication 4, comprenant en outre :

> identifier une partie de texte non structuré voisine et comprenant l'événement, la partie de texte non structuré ayant une taille de texte configurable par l'utilisateur ;
> calculer le score de confiance associé à l'événement en faisant la moyenne de tous les comptes de N-grammes déduits à partir de la partie de texte non structuré ;
> comparer le score de confiance calculé associé à l'événement à une moyenne estimée préalablement associée à l'au moins un attribut d'événement compris dans l'ensemble d'attributs d'événement prédéfinis ; et
> affecter le score de confiance à l'événement sur la base de la comparaison.

**9.** Procédé selon la revendication 8, comprenant en outre la détermination, si le score de confiance dépasse une valeur de seuil, du point de savoir si un attribut candidat compris dans la partie de texte non structuré est susceptible d'être identifié par un modèle M entraîné sur un premier corps de texte non structuré, le premier corps de texte non structuré étant une partie de texte non structuré déterminée comme étant un vrai positif pour l'attribut d'événement.

**10.** Procédé selon la revendication 9, dans lequel la probabilité de l'attribut candidat qui est identifiée par le modèle M entraîné sur le premier corps de texte non structuré $P_M(c)$ est calculée par :

$$P_M\big(c\big) = \sum_{\forall n-gramme\ n\ \in\ c} \log\big(pgen_M\big(n\big)\big)$$

où $pgen_M(n)$ est une probabilité du modèle M entraîné sur un texte non structuré pour générer le n-gramme n et est calculée par :

$$pgen_M\big(n\big) = \frac{S\big(compte_M\big(n\big)\big)}{\sum_{\forall i\ \in\ M} compte\big(i\big)}$$

où S( ) est une fonction de lissage de Good-Turing pour prendre en compte des n-grammes d'occurrence 0.

**11.** Procédé selon la revendication 10, dans lequel, si la probabilité calculée de l'attribut candidat est inférieure à une valeur de probabilité de seuil associée au modèle entraîné sur le premier corps de texte non structuré, diminuer la valeur du score de confiance calculé.

**12.** Procédé selon la revendication 10, comprenant en outre :

> appliquer un classificateur binaire à la partie de texte non structuré ;
> augmenter le score de confiance calculé pour l'attribut candidat si le classificateur binaire classe la partie de texte non structuré comme étant positive pour l'attribut d'événement ; et
> diminuer le score de confiance calculé pour l'attribut candidat si le classificateur binaire classe la partie de texte non structuré comme étant négative pour l'attribut d'événement.

**13.** Procédé selon la revendication 2, dans lequel le modèle d'estimation de probabilité utilise une régression isotonique ou un schéma d'estimation de probabilité et le score de classification généré est une combinaison linéaire pondérée de la pluralité de valeurs de probabilité calculées.

**14.** Procédé selon la revendication 2, dans lequel la génération des caractéristiques de document pour chacun des attributs identifiés comprend l'application d'une pluralité de schémas de génération de caractéristiques aux attributs identifiés.

**15.** Procédé selon la revendication 2, comprenant en outre l'entraînement (56) de la pluralité de classificateurs à l'aide d'une pluralité de schémas de génération de caractéristiques, un ensemble de documents d'entraînement comprenant chacun au moins un événement candidat, et l'ensemble d'attributs d'événement prédéfinis.

FIG. 1

START

Normalize Each of the Training Documents — 50

Identify Candidate Attributes in Each of the Training Documents — 52

Generate Features for Each of the Training Documents representing Positive and Negative Examples — 54

Train Classifiers for Each Pre-Defined Attribute using the Positive and Negative Examples — 56

For Each Trained Classifier, Train a Probability Estimation Model — 58

For Each Event, Train a Confidence Model — 60

END

FIG. 2

FIG. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040024769 A1

- US 20110066585 A1